**Europäisches Patentamt**

**European Patent Office**

**Office européen des brevets**

(19)

(11) Veröffentlichungsnummer: **0 237 072**
**A2**

# (12) EUROPÄISCHE PATENTANMELDUNG

(21) Anmeldenummer: **87103602.6**

(22) Anmeldetag: **12.03.87**

(51) Int. Cl.⁴: **C04B 35/58**

(30) Priorität: **13.03.86 DE 3608326**

(43) Veröffentlichungstag der Anmeldung:
**16.09.87 Patentblatt 87/38**

(84) Benannte Vertragsstaaten:
**AT BE CH DE FR GB IT LI NL SE**

(71) Anmelder: **Elektroschmelzwerk Kempten GmbH**
**Herzog-Wilhelm-Strasse 16**
**D-8000 München 2(DE)**

(72) Erfinder: **Schwetz, Alexander, Dr. Dipl.-Ing.**
**Bergstrasse 4**
**D-8961 Sulzberg(DE)**
Erfinder: **Grellner, Wolfgang, Dr. Dr.-Ing.**
**Neisserstrasse 23**
**D-8960 Kempten(DE)**
Erfinder: **Hunold, Klaus, Dr. Dipl.-Ing.**
**Hochgratweg 8**
**D-8961 Lauben(DE)**
Erfinder: **Mohr, Max, Dipl.-Ing.**
**Gerberstrasse 33**
**D-8960 Kempten(DE)**
Erfinder: **Lipp, Alfred, Dr. Dipl.-Chem.**
**Bürgermeister-Singer-Strasse 15**
**D-8939 Bad Wörishofen(DE)**

(54) **Praktisch porenfreie Formkörper aus polykristallinem Aluminiumnitrid und Verfahren zu ihrer Herstellung ohne Mitverwendung von Sinterhilfsmitteln.**

(57) Gegenstand der Erfindung sind praktisch porenfreie Formkörper aus polykristallinem Aluminiumnitrid mit einer Dichte von mindestens 99,8 % TD, die aus

mindestens 99 Gew..% AlN
bis zu 0.35 Gew.-% Restsauerstoff
bis zu 0.35 Gew.-% Restkohlenstoff und
bis zu 0.30 Gew.-% metallischen Verunreinigungen (Fe,Si,Ca,Mg)

insgesamt bestehen. In diesen Formkörpern liegt das Aluminiumnitrid in Form einer einphasigen, homogenen, isotropen Mikrosturktur vor mit Korngrößen von maximal 5 μm. Der Restsauerstoff und der Restkohelnstoff sind in Form einer festen Lösung im Aluminiumnitridgitter vorhanden und sind bis zu 2400-facher Vergrößerung nicht als getrennte Phase(n) nachweisbar. Die Formkörper haben eine Biegebruchfestigkeit, gemessen nach der 4-Punkt-Methode, bei Raumtemperatur und bis zu 1400°C von mindestens 500 N/mm², einen überwiegend transkristallinen Bruchmodus und eine Wärmeleitfähigkeit bei 300 K von mindestens 150 W/mK. Die Formkörper sind aus porösen, desoxidierten Grünkörpern mit einer Dichte von maximal 70 % TD und gleicher chemischer Zusammensetzung wie die Endprodukte, durch isostatische Heißpressen in einer vakuumdicht geschlossenen Hülle bei einer Temperatur von 1700° bis 2100°C und einem Druck von 100 bis 400 MPa im Hochdruckautoklaven unter Verwendung eines inerten Gases als Druckübertragungsmedium hergestellt worden.

EP 0 237 072 A2

## Praktisch porenfreie Formkörper aus polykristallinem Aluminiumnitrid und Verfahren zu ihrer Herstellung ohne Mitverwendung von Sinterhilfsmitteln

Polykristalline Formkörper auf Basis von Aluminiumnitrid sind bekannt. Sie zeichnen sich durch eine Kombination wertvoller Eigenschaften aus, wie hohe Festigkeit, Oxidationsbeständigkeit, Thermoschockbeständigkeit, hohe Wärmeleitfähigkeit, niedrige elektrische Leitfähigkeit und Korrosionsbeständigkeit gegenüber flüssigen Metallen. Aufgrund dieser Eigenschaftskombination können sie auf sehr vielen Anwendungsgebieten eingesetzt werden, wobei die Verwendung als Konstruktionswerkstoffe im Hochtemperaturmaschinenbau und als Substratwerkstoffe in der Hochleistungselektronik zunehmend an Bedeutung gewinnt.

Die bisher bekannten polykristallinen Formkörper auf Basis von Aluminiumnitrid haben jedoch teilweise erheblich schlechtere Eigenschaften als reines Aluminiumnitrid, da dessen Eigenschaften in hohem Maße von vorhandenen Verunreinigungen abhängig sind, worunter insbesondere Verunreinigungen durch Sauerstoff, Kohlenstoff und Metalle zu verstehen sind. So ist beispielsweise bekannt, daß der theoretisch mögliche Wert für die Wärmeleitfähigkeit von reinem, einkristallinem Aluminiumnitrid 320 W/mK beträgt, der mit zunehmendem Sauerstoffgehalt auf etwa 50 W/mK abfällt. Noch niedrigere Werte können bei weiterer Erhöhung des Sauerstoffgehaltes oder in zweiphasigen Aluminiumnitrid-Keramiken festgestellten werden (vgl. G.A. Slack in J. Phys. Chem. Solids (1973), Vol 34, Seite 321-335; ref. in C.A. Vol. 78 (1973), No. 129 310 r).

Desgleichen ist die Festigkeit insbesondere bei höheren Temperaturen, von vorhandenen Verunreinigungen abhängig und es ist bekannt, daß beispielsweise die Biegebruchfestigkeit bei Temperaturen von mehr als 1000°C gegenüber dem bei Raumtemperatur gemessenen Wert stark abfällt, was vermutlich auf das Vorhandensein von Sauerstoff enthaltenden Phasen an den Korngrenzen im Aluminiumnitrid-Sinterkörper zurückzuführen ist.

Bekannt ist aber auch, daß reines Aluminiumnitrid aufgrund seiner überwiegend kovalenten Bindung nur sehr schlecht sinterfähig ist. Zur Erzielung hoher Sinterdichten wurde es daher für notwendig gehalten, entweder von sauerstoffreichen Aluminiumnitridpulvern auszugehen oder Sinterhilfsmittel, vorwiegend solche auf Oxidbasis, mitzuverwenden, welche die Verdichtung beim Heißpressen unterstützen. So wurde beispielsweise aus Aluminiumnitridpulver mit einem Sauerstoffgehalt von 1,0 Gew.-%, aus dem sich ein $Al_2O_3$-Gehalt von 2,1 Gew.-% errechnet, durch axiales Heißpressen ein Aluminiumnitridformkörper mit 98 % theoretischer Dichte (im folgenden als % TD abgekürzt) erhalten, der bei Raumtemperatur eine Biegebruchfestigkeit von 265 N/mm² hatte, die bei 1400°C auf 125 N/mm² abfiel (vgl. DE-A_14 71 035, die der US-A 108 887 entspricht).

Durch Heißpressen von handelsüblichen Aluminiumnitridpulvern bei 2000°C wurden Sinterdichten von 97 bis 99 % TD erzielt. Der reinste der so hergestellten polykristallinen Aluminiumnitridformkörper enthielt 0,9 Gew.-% Sauerstoff, hatte eine Dichte von 97 % TD und eine Wärmeleitfähigkeit von 66 W/mK (vgl. G.A. Slack et al. in Amer. Ceram. Soc. Bull. (1972) Vol. 71, Seite 852 bis 856; ref. in C.A. Vol. 78 (1973) No. 19686 k und DE-A-20 35 767).

Die Untersuchung der mechanischen Eigenschaften von polykristallinen Aluminiumnitridformkörpern, die durch Heißpressen von handelsüblichen Aluminiumnitridpulvern ohne Mitverwendung von Sinterhilfsmitteln hergestellt wurden, ergab:

Bei der Heißpresstemperatur von 1700°C wurde ein dichter Körper erhalten (0 % Porosität), der 0,8 Gew.-% Sauerstoff enthielt und eine Biegebruchfestigkeit von 375 N/mm², gemessen nach der 3-Punkt-Methode bei Raumtemperatur, hatte, die bei 1300°C auf etwa 225 N/mm² abfiel (vgl. P. Boch et el. in Ceram. Int. 1982), Vol. 8 (1), Seite 34-40; ref. in C.A. Vol. 97 (1982) No. 59846 m).

Aus Japan wurde berichtet, daß auch in Bezug auf metallische Verunreinigungen hochreine Aluminiumnitridpulver ohne Zusatz von Sinterhilfsmittel bei Temperaturen von 2000°C unter Bildung von dichten transparenten Körpern heißgepresst werden können. Physikalische Daten wurden jedoch nur für einphasige Aluminiumnitridkörper angegeben, die unter Zusatz von 0,5 Gewichtsprozent Calciumoxid als Sinterhilfsmittel hergestellt wurden und die 0,5 bis 0,7 Gew.-% Sauerstoff enthielten: Ein heißgepresster AlN-Körper hatte eine Dichte von 99,6 % TD, eine Wärmeleitfähigkeit von 91 W/mK und eine Biegefestigkeit von 510 N/mm², gemessen bei Raumtemperatur nach der 3-Punkt-Methode; ein drucklos gesinterter AlN-Körper hatte eine Dichte von 99,1 % TD und eine Wärmeleitfähigkeit von 95 W/mK (vgl. N. Kuramoto et al. in J. Mater. Sci. Lett. 1984, Vol. 3 (6), Seite 471 -474; ref. in C.A. Vol. 101 (1984), No. 42402s).

Außerdem haben Aluminiumnitridformkörper, die durch konventionelles Heißpressen mit biaxialer Druckanwendung hergestellt worden sind, eine anisotrope Mikrostruktur, so daß ihre Eigenschaften richtungsabhängig sind.

Da mit Hilfe des Heißpressverfahrens nur einfach geformte Körper hergestellt werden können,wurden auch für die Herstellung von polykristallinen Formkörpern auf Aluminiumnitridbasis drucklose Sinterverfahren entwickelt, bei welchen zur Erzielung hoher Sinterdichten die Mitverwendung von Sinterhilfsmitteln unbedingt erforderlich ist. Zahlreiche Verbindungen wurden hinsichtlich ihrer sinterfördernden Wirkung für Aluminiumnitrid untersucht, wobei sich solche auf Oxidbasis von Elementen aus den Gruppen 2a und 3b des Periodischen Systems einschließlich der Lanthaniden besonders bewährt haben (vgl. K. Komeya et al. in Yogyo Kyokaishi; 1981, Vol. 89 (6), Seite 330-336; ref. in C.A. Vol. 95 (1981), No. 155257 z).

Wegen der bekannten Empfindlichkeit des Aluminiumnitrids gegenüber Verunreinigungen, insbesondere Sauerstoffverunreinigungen, mußte jedoch versucht werden, entweder mit möglichst geringen Mengen an Sinterhilfsmitteln auszukommen oder durch zusätzliche Maßnahmen den im Aluminiumnitridpulver vorhandenen Sauerstoff und/oder den durch die Sinterhilfsmittel eingebrachten Sauerstoff zu verringern.

Nach dem aus der US-A-4 435 513 bekannten Verfahren wurden daher handelsübliche Aluminiumnitridpulver mit einem Sauerstoffgehalt von nicht mehr als 5 Gew.-% zusammen mit bis zu 5,66 Gew.-% Sinterhilfsmittel auf Basis von Erdalkalioxiden und mit bis zu 6,54 Gew.-% Kohlenstoff in Form von beispielsweise Ruß oder einem verkokbaren organischen Material, wie Zucker oder Phenolharz,bei Temperaturen bis zu 2000°C drucklos gesintert. Durch den Kohlenstoffzusatz soll die Bildung von Aluminiumnitridphasen verhindertvund der im Aluminiumnitridausgangspulver vorhandene Sauerstoff entfernt werden. Wie aus den Beispielen ersichtlich, hatten so hergestellte Aluminiumnitridformkörper mit einer Dichte von 98,5 % TD eine Wärmeleitfähigkeit von 63 W/mK. Durch eine anschließende Behandlung mittels Heißisostatpressen konnte die Dicht auf > 99 % TD und die Wärmeleitfähigkeit auf 71 W/mK gesteigert werden.

Nach dem aus der EP-A-147 101 bekannten Verfahren wurden Aluminiumnitridpulver, die 0,001 bis 7 Gew.-% Sauerstoff enthielten, zusammen mit 0,01 bis 15 Gew.-% Oxiden von Seltenen Erdmetallen heißgepresset oder drucklos gesintert. Damit soll erreicht werden, daß der im Aluminiumnitridausgangspulver vorhandene Sauerstoff mit den Oxiden der Seltenen Erdmetalle (vorzugsweise $Y_2O_3$) reagiert unter Bildung von Verbindugen (Phasen) mit Granatstruktur oder mit Perowskitstruktur, damit kein überschüssiger Sauerstoff in das Aluminiumnitridgitter unter Mischkristallbildung oder Bildung von Aluminiumoxinitridphasen (AIN-Polytypen) eindiffundieren kann. Diese Granat-oder Perowskit-Phasen werden während des Sintervorgangs bei relativ niedrigen Temperaturen (1000° bis 1300°C) gebildet, sie schmelzen bei höheren Temperaturen (1600° bis 1950°C) und bewirken eine sogenannte Flüssigphasen-Sinterung, die zu hochverdichteten Körpern führt. Wie aus den Beispielen ersichtlich, wurden die besten Ergebnisse hinsichtlich der Wärmeleitfähigkeit mit Aluminiumnitridkörpern erreicht, die aus Aluminiumnitridpulvern mit Sauerstoffgehalten von 0,3 bis 1,0 Gewichtsprozent unter Zusatz von 0,1 bis 3,0 Gew.-% $Y_2O_3$ durch druckloses Sintern bei 1800°C hergestellt worden waren. Für den AIN-Körper mit dem relativ hohen Sauerstoffgehalt von etwa 0,9 Gew.-% (0,6 Gew.-% ausx dem AIN-Pulver + etwa 0,3 Gew.-% Sauerstoff aus 1,5 Gew.-% $Y_2O_3$ -Zusatz) wurde die höchste Wärmeleitfähigkeit aller Beispiele mit 135 W/mK angegeben. Durch Röntgenbeugungsanalyse wurden in diesen Körpern neben der Hauptphase Aluminiumnitrid, geringe Mengen der Al-Y-Granatphase und Aluminiumoxinitridphase nachgewiesen, die somit als oxidische Verunreinigungsphasen an den Aluminiumnitridkorngrenzen vorliegen.

Nach dem aus der EP-A-13 32 75 (die der US-A-4 478 785 und der US-A-4 533 645 entspricht) bekannten Verfahren wurde bewußt auf den Zusatz von Sinterhilfsmitteln verzichtet und nur ein Kohlenstoff enthaltender Zusatz verwendet. Hierbei wurden handelsübliche, in Bezug auf metallische Verunreinigungen hochreine Aluminiumnitridpulver, die etwa 1,5 bis 3,0 Gew.-% Sauerstoff enthielten, durch den Kohlenstoffzusatz nur teilweise desoxidiert,so daß die Aluminiumnitrid pulver oder daraus hergestellte Grünkörper nach der Desoxidationsbehandlung durch Erhitzen noch einen Restsauerstoffgehalt von mehr als 0,35 bis zu etwa 1,1 Gew.-% aufwiesen. Dieser hohe Restsauerstoffgehalt ist für die Durchführung der drucklosen Sinterung bei Temperaturen im Bereich von 1900° bis 2200° unbedingt erforderlich, damit Sinterdichten von mehr als 85 % TD der resultierenden Sinterkörper erreicht werden können. Dementsprechend haben auch die fertigen Aluminiumnitridsinterkörper noch einen Restsauerstoffgehalt in der gleichen Größenordnung von mehr als 0,35 und bis zu etwa 1,1 Gew.-% und einen Restkohlenstoffgehalt in nachweisbaren Mengen bis zu weniger als etwa 0,2 Gew.-%. Diese Aluminiumnitridsinterkörper werden als phasenrein bezeichnet, worunter zu verstehen ist, daß sie weniger als etwa 1 Vol.-% Zweitphasen (das heißt andere Phasen als AIN) enthalten können. Wie aus den Beispielen ersichtlich, mußte jedoch der Verzicht auf Sinterhilfsmittel durch mangelhafte Enddichten im Bereich von 91,6 bis 97,2 % TD und relativ hohe Restsauerstoffgehalte erkauft werden, die trotz Verwendung eines in Bezug auf die metallischen Verunreinigungen hochreinen Aluminiumnitridausgangspulvers nur Raumtemperatur-Wärmeleitfähigkeitswerte von maximal 82 W/mK erreichen ließen.

Nach dem aus der EP-A-15 25 45 bekannten Verfahren soll indessen die Verbesserung der Wärmeleitfähigkeit dadurch erreicht werden, daß für die Desoxidation des Aluminiumnitrids anstelle des Kohlenstoffzusatzes ein Yttrium enthaltender Zusatz, wie Yttriummetall, Yttriumwasserstoff und/oder Yttriumnitrid verwendet wird. Diese Zusätze reagieren mit dem im Aluminiumnitrid vorhandenen Sauerstoff unter Bildung von Yttrium und Sauerstoff enthaltenden flüssigen Phasen, die gleichzeitig als Sinterhilfsmittel bei der drucklosen Sinterung wirken. Diese flüssigen Phasen verbleiben nach dem Abkühlen im Aluminiumnitridsinterkörper als Zweitphasen an den Korngrenzen des Aluminiumnitrids. Die geringste Menge dieser Zweitphasen hat die Zusammensetzung gemäß Punkt F in dem angegebenen Zustandsdiagramm mit 1,6 Äquivalent Y und 4,0 Äquivalentprozent Sauerstoff, das entspricht 6,2 Gew.-% $YAlO_3$-Zweitphase oder anders ausgedrückt 1,81 Gew.-% Sauerstoff und 3,36 Gew.-% Y im AlN-Sinterkörper. Wie aus den Beispielen ersichtlich, wurde der höchste Wert für die Wärmeleitfähigkeit mit 174 W/mK für einen AlN-Sinterkörper angegeben, der $Y_2O_3$ und $Y_4Al_2O_9$ als Zweitphasen enthielt.

Wie aus dem umfangreichen Stand der Technik ersichtlich, ist es bisher offensichtlich nicht gelungen, polykristalline Aluminiumnitridformkörper herzustellen, die sowohl eine hohe Dichte haben, als auch weitgehend frei von Verunreinigungen durch Sauerstoff, Kohlenstoff und/oder Metalle sind, welche die Wärmeleitfähigkeit durch Veränderung der Gitterparameter in den Aluminiumnitridkristallen und/oder in Hochtemperaturfestigkeit durch Verunreinigungsphasen an den Korngrenzen der Aluminiumnitridkristalle störend beeinflussen.

Es stellt sich somit die Aufgabe,hochverdichtete, praktisch porenfreie Formkörper aus polykristallinem Aluminiumnitrid mit hoher Reinheit zur Verfügung zu stellen, die verbesserte thermische und mechanische Eigenschaften aufweisen und die deshalb für ein breites Anwendungsspektrum genutzt werden können, worunter zu verstehen ist, daß sie beispielsweise sowohl als Konstruktionswerkstoffe im Hochtemperaturmaschinenbau, als auch als Substratwerkstoffe in der Hochleistungselektronik eingesetzt werden können. Außerdem ist ein Verfahren anzugeben, mit dem derartige Formkörper mit den gewünschten Eigenschaften ohne Mitverwendung von Sinterhilfsmitteln wirtschaftlich und reproduzierbar hergestellt werden können.

Erfindungsgemäß wird diese Aufgabe gelöst durch praktisch porenfreie Formkörper aus polykristallinem Aluminiumnitrid mit einer Dicht von mindestens 99,8 % TD, bezogen auf die theo retisch mögliche Dichte von reinem Aluminiumnitrid, die aus

mindestens 99 Gew.-% Aluminiumnitrid,

bis zu 0.35 Gew.-% Restsauerstoff,

bis zu 0.35 Gew.-% Restkohlenstoff und

bis zu 0.30 Gew.-% metallischen Verunreinigungen

(Fe, Si, Ca, Mg) insgesamt

bestehen, wobei das Aluminiumnitrid in Form einer im wesentlichen einphasigen, homogenen, isotropen Mitrostruktur mit Korngrößen von maximal 5 µm vorliegt, der Restsauerstoff und der Restkohlenstoff in Form einer festen Lösung im AlN-Gitter vorhanden und bis zu 2.400-facher Vergrößerung nicht als getrennte Phase(n) nachweisbar sind mit den Eigenschaften:

Biegebruchfestigkeit (gemessen nach der 4-Punkt-Methode) bei Raumtemperatur und bis zu 1400°C von mindestens 500 N/mm², überwiegend transkristallinem Bruchmodus und Wärmeleitfähigkeit bei 300 K von mindestens 150 W/mK.

Die erfindungsgemäßen Formkörper sind aus porösen desoxidierten Grünkörper mit einer Dichte von maximal 70 % TD, die aus

mindestens 99 Gew.-% Aluminiumnitrid,

bis zu 0.35 Gew.-% Restsauerstoff,

bis zu 0.35 Gew.-% Restkohlenstoff und

bis zu 0.30 Gew.-% metallischen Verunreinigungen

(Fe, Si, Ca, Mg) insgesamt

bestehen, durch isostatisches Heißpressen in eine vakuumdicht geschlossenen Hülle bei einer Temperatur von 1700° bis 2100°C und einem Druck von 100 bis 400 MPa im Hochdruckautoklaven unter Verwendung eines inerten Gases als Druckübertragungsmedium hergestellt worden.

Da während des isostatischen Heißpressvorgangs durch die vorhandene vakuumdicht geschlossene Hülle nichts entweichen kann, haben die erfindungsgemäßen Formkörper mit mindestens 99,8 % TD, vorzugsweise 100 % TD,dieselbe chemische Zusammensetzung wie die porösen, desoxidierten Grünkörper mit maximal 70 % TD.

Die erfindungsgemäßen Formkörper aus polykristallinem Aluminiumnitrid haben definitionsgemäß eine praktisch einphasige Mikrostruktur, in der die einzelnen AlN-Körper mit Korngrößen von maximal 5 µm gleichmäßig, das heißt homogen und richtungsunabhängig,verteilt sind. Der Restsauerstoff und der Restkohlenstoff liegen im wesentlichen in Form einer festen Lösung im Aluminiumnitridgitter vor,so daß sie durch röntgenographische Phasenanalyse bzw. keramographisch bis zu 2400-facher Vergrößerung nicht als getrennte Phase oder Phasen nachgewiesen werden können. Die metallischen Verunreinigungen können hingegen in Form von partikulären Ausscheidungen in Größen von ≤ 0,5 μm nachweisbar sein.

Für die Herstellung der desoxidierten Grünkörper wird als AlN-Ausgangsmaterial vorteilhaft ein Pulver mit einer maximalen Teilchengröße von 5 μm, vorzugsweise 2 μm, und einer mittleren Teilchengröße von < 1 μm, vorzugsweise < 0,5 μm, mit einer spezifischen Oberfläche von 4 bis 10 m²/g (gemessen nach BET) und einer Reinheit von mindestens 99,8 %, vorzugsweise > 99,9 %, bezogen auf die metallischen Verunreinigungen verwendet. Unter metallischen Verunreinigungen sind alle metallischen Elemente (im wesentlichen Fe, Si, Ca und Mg) zu verstehen mit Ausnahme des in gebundener Form vorliegenden Aluminiums, die ausschließlich von der Herstellung her in handelsüblichen AlN-Pulver vorhanden sein können.

Der von der Herstellung her in handelsüblichem AlN-Pulver vorhandene anhaftende Kohlenstoff kann bis zu höchstens 0,2 Gew.-% toleriert werden. Der aufgrund der bekannten Hydrolyse-Neigung feinteiliger AlN-Pulver (gemäß AlN + 3 H₂ → NH₃ + Al(OH)₃ ) als Hauptverunreinigung, größtenteils in Form des Hydrolyseproduktes Al(OH)₃ vorliegende Restsauerstoffgehalt kann bis zu höchstens 4,0 Gew.-% toleriert werden.

Diese Aluminiumnitridausgangspulver werden zusammen mit ge ringen Mengen eines Kohlenstoff enthaltenden Zusatzes kompaktiert unter Bildung von vorgeformten Grünkörpern und dann einer Hitzebehandlung, worunter eine reinigende Desoxidationsglühung zu verstehen ist, bei 1600° bis 1800°C in Stickstoffatmosphäre unterzogen unter Bildung der desoxidierten Grünkörper mit der maximalen Dichte von nicht mehr als 70 % TD.

Der Kohlenstoff enthaltende Zusatz für die Herstellung der desoxidierten Grünkörper kann in jeder Form verwendet werden, die eine gleichmäßige Verteilung in der AlN-C-Mischung sicherstellt, zum Beispiel als partikulärer Ruß oder kolloidaler Graphit mit einer spezifischen Oberfläche im Bereich von 10 bis 400 m²/g. Zur Erzielung guter Preßeigenschaften der Ruß oder kolloidalen Graphit enthaltenden Pulvergemische werden vorteilhaft geringe Mengen eines temporären Bindemittels, wie Campher oder Stearinsäure mitverwendet. Diese Bindemittel werden vorzugsweise in Mengen bis zu insgesamt maximal 3 Gew.-%, bezogen auf die resultierende Mischung, verwendet. Vorzugsweise wird jedoch der Kohlenstoff enthaltend Zusatz in Form eines organischen Materials eingesetzt, das bei Temperaturen bis zu etwa 1000°C unter Bildung von Kohlenstoff verkokt werden kann. Beispiele hierfür sind Phenolformaldehyd-Kondensationsprodukte vom Typ der Novolake und Resole die im Bereich von 100° bis 900°C unter Bildung vom amorphem Kohlenstoff in etwa 35 bis 50 %-iger Ausbeute zersetzt werden.

Für die Festlegung der Menge des Kohlenstoff enthaltenden Zusatzes im Ausgangsgemisch ist der im Aluminiumnitridausgangspulver vorhandene freie Kohlenstoff zu berücksichtigen. Die Gesamtmenge des in der kompaktierten Pulvermischung, gegebenenfalls erst nach Verkokung des organischen Materials vorhandenen freien Kohlenstoffs ist für die Durchführung des Verfahrens und zur Erzielung der vorteilhaften Eigenschaften der Sinterkörper von entscheidender Bedeutung. Es wurde festgestellt, daß insgesamt mehr Kohlenstoff verwendet wer den muß als stöchiometrisch für die Desoxidation der im Aluminiumnitridpulver vorhandenen Sauerstoffverunreinigungen erforderlich ist. Als Berechnungsgrundlage für die stöchiometrisch erforderliche Kohlenstoffmenge kann die Reaktionsgleichung für die carbothermische Reduktion von Aluminiumhydroxid in Stickstoffatmosphäre

$$2 \text{ Al(OH)}_3 + 3 \text{ C} + \text{N}_2 \rightarrow 2 \text{ AlN} + 3 \text{ H}_2\text{O} + 3 \text{ CO}$$

herangezogen werden. Der so errechnete Wert ist jedoch ein Näherungswert, da der Sauerstoff im Aluminiumnitridpulver in der Regel nicht vollständig als Al(OH)₃ vorliegt, sondern teilweise auch als physikalisch oder chemisch absorbiertes Wasser, als im Aluminiumnitridgitter gelöster Sauerstoff und als Aluminiumoxid (Al₂O₃) vorliegen kann.

Die Menge des Kohlenstoffzusatzes wird zweckmäßig so bemessen, daß sie für die Erniedrigung des Sauerstoffgehalts im desoxidierten Grünkörper auf weniger als 0,35 Gew.-% Restsauerstoff ausreicht, aber gleichzeitig den im desoxidierten Grünkörper verbleibenden Kohlenstoffgehalt auf nicht mehr als 0,35 Gew.-% Restkohlenstoff erhöht. Zu geringe Mengen des Kohlenstoffzusatzes führen zu desoxidierten Grünkörpern mit mehr als 0,35 Gew.-% Sauerstoff, zu große Mengen des Kohlenstoffzusatzes führen zu desoxidierten Grünkörpern mit mehr als 0,35 Gew.-% Kohlenstoff, wodurch jeweils die Eigenschaften der aus den desoxidierten Grünkörpern hergestellten hochverdichteten Aluminiumnitridformkörpern verschlechtert werden. Die optimale Menge des Kohlenstoffzusatzes für ein Aluminiumnitridausgangspulver von bestimmter Kornfeinheit und gegebenem Sauerstoff-und Kohlenstoffgehalt kann durch orientierende Desoxidationsversuche jeweils leicht ermittelt werden.

Die Durchführung des Verfahrens zur Herstellung der desoxidierten Grünkörper wird wie folgt erläutert: Zunächst wird das AlN-Pulver mit dem Kohlenstoff enthaltendem Zusatz homogen vermischt, was vorteilhaft dadurch erreicht wird, daß der C-Zusatz in Form des organischen Materials in einem Lösungsmittel gelöst und das AlN-Pulver in der Lösung dispergiert wird. Bei Einsatz von freiem C per se wird das AlN-Pulver gemeinsam mit dem elementaren Kohlenstoff in einer Lösung eines temporären Bindemittels dispergiert. Als organische Lösungsmittel können beispielsweise Aceton oder niedere aliphatische Alkohole mit 1 bis C-Atomen Verwendung finden. Das Dispergieren kann durch mechanische Bewegung einer dünnflüssigen Suspensionen in Plastikbehältern unter Verwendung eines Rührers oder durch Kneten einer dickflüssigen Suspension in einer Knetvorrichtung vorgenommen werden. Dann wird das Lösungmittel entfernt, beispielsweise bei einer dünnflüssigen Suspension durch Sprühtrocknung oder bei einer dickflüssigen Suspension durch Abdunsten während des Knetvorganges, wobei zur Zerstörung von Agglomeraten und Sicherstellung einer homogenen Verteilung des Kohlenstoff enthaltenden Zusatzes in der Regel eine Trockenmahlung in einer Strahl-, Stift-oder Kugelmühle nachgeschaltet wird.

Diese Ausgangspulvergemische werden durch Formgebung unter Bildung von vorgeformten Grünkörpern kompaktiert. Die Formgebung kann mittels üblicher bekannter Maßnahmen, beispielsweise durch Gesenkpressen, isostatisches Pressen oder Schlickergießen vorgenommen werden. Beim Gesenkpressen in Matrizen bzw. beim isostatischen Pressen wird üblicherweise ein Druck zwischen 30 bis 200 MPa, vorzugsweise 50 bis 100 MPa angewendet.

Anschließend werden diese vorgeformten Grünkörper definitionsgemäß der Desoxidationsglühung unter Stickstoffatmosphäre bei 1600° bis 1800°C unterworfen. Der angegebenen Temperaturbereich ist für die Erzielung der gewünschten Eigenschaften der Endprodukte von entscheidender Bedeutung, denn es wurde nachgewiesen, daß unter gleichen Bedingungen, jedoch bei tieferen Temperaturen keine ausreichende Desoxidation bis auf Restsauerstoffgehalte von $\leq$ 0,35 Gew.-% erzielt wurde, wäh rend bei höheren Temperaturen insbesondere $\geq$ 1900°C infolge teilweiser Sinterung eine merkliche Kornvergröberung auftrat, was mit einer Verschlechterung der Festigkeitseigenschaften des Endproduktes verbunden war.

Die Desoxidationsglühung der vorgeformten Grünkörper kann in jedem beliebigen Hochtemperaturofen durchgeführt werden, wie in einem Graphitrohrwiderstandsofen (Tammann-Ofen) oder in einem induktiv beheizten Ofen mit Graphitauskleidung. Für kontinuierlichen Betrieb kann vorteilhaft ein horizontaler Durchschubofen verwendet werden, in dem die vorgeformten Grünkörper durch die Heizzone des Ofens transportiert werden und zwar derart,daß sie jeweils für eine vorgesehene Zeitspanne auf der gewünschten Temperatur gehalten werden. Die Zeitspanne für das Aufheizen und das Verweilen bei der Endtemperatur sind dabei von der Größe der zu desoxidierenden vorgeformten Grünkörper abhängig. Die vorgeformten Grünkörper werden zweckmäßig in Graphitbehältern untergebracht und zur Vermeidung einer Aufkohlung aus dem Behältermaterial von grobkörnigem Aluminiumnitridpulver umgeben. Vorzugsweise werden die vorgeformten Grünkörper jedoch in Behältern aus Aluminiumnitrid ohne Verwendung des umgebenden Pulverbetts aus Aluminiumnitrid chargiert. Als Gasatmosphäre wird Stickstoff, gegebenenfalls im Gemisch mit Kohlenmonoxid verwendet. Die Desoxidation wird vorteilhaft in strömender Stickstoffatmosphäre, das heißt unter einem Stickstoffdruck von etwa 0,1 MPa durchgeführt; sie kann jedoch auch unter vermindertem $N_2$-Druck durchgeführt werden, wobei sich ein Druck von etwa 5000 Pa besonders bewährt hat. Die nach der Desoxidationsglühung erhaltenen desoxidierten Grünkörper haben in der Regel eine Dichte von 55 bis 65 % TD,auf alle Fälle jedoch $\leq$ 70 % TD, das heißt, sie sind porös mit offener Porosität, worunter zu verstehen ist, daß sie zur Oberfläche offene Poren oder Kanalporen haben.

Diese desoxidierten Grünkörper bestehen definitionsgemäß aus mindestens 99 Gew.-% AlN, mit Restsauerstoff-und Restkohlenstoffgehalten von vorzugsweise jeweils weniger als 0,35 Gew.-% und mit unvermeidlichen metallischen Verunreinigungen von vorzugsweise weniger als 0,3 Gew.-%, die ausschließlich von der Herstellung und der Weiterverarbeitung im verwendeten Aluminiumnitridpulver vorhanden waren, da auf die Mitverwendung von Metall enthaltenden Sinterhilfsmitteln bewußt verzichtet worden ist.

Diese desoxidierten Grünkörper werden für die Herstellung der erfindungsgemäßen, praktisch porenfreien Formkörper aus polykristallinem Aluminiumnitrid verwendet, die definitionsgemäß durch isostatisches Heißpressen der desoxidierten Grünkörper in einer vakuumdicht geschlossenen Hülle bei einer Temperatur von 1700° bis 2100°C und einem Druck von 100 bis 400 MPa im Hochdruckautoklaven unter Verwendung eines inerten Gases als Druckübertragungsmedium erfolgt.

Für die Durchführung dieses Verfahrens zur Herstellung der erfindungsgemäßen Formkörper müssen die desoxidierten Grünkörper mit einer gasdichten Hülle versehen werden, bevor sie in den Hochdruckautoklaven eingebracht werden, um zu vermeiden, daß das als Druckübertragungsmedium verwendete Gas durch die offenen Poren in den Körper eindringt und dadurch die Verdichtung verhindert.

Als Materialien für diese gasdicht verschließbaren Hüllen sind selbstverständlich nur solche brauchbar, die bei den angewendeten Preßtemperaturen im Bereich von 1700° bis 2100°C weder schmelzen noch mit den desoxidierten Grünkörpern reagieren, das heißt, sie müssen sich dessen gegenüber vollkommen inert verhalten. Sie müssen bei den angewendeten Preßtemperaturen hinreichend plastisch sein und sich der Form des Körpers genau anpassen,ohne zu reißen,um sicherzustellen, daß der Gasdruck gleichmäßig über die Hülle auf den Körper übertragen wird.

Beispiele für geeignete Hüllmaterialien, die diesen Anforderungen genügen, sind hochschmelzende Gläser, wie reines Quarzglas, hochsmelzende Keramikarten oder hochschmelzende Metalle und Metallegierungen, wie Molybdän, Tantal oder Wolfram. Diese Materialien können in Form von vorgefertigten Hüllen oder Kapseln verwendet werden, in welche die desoxidierten Grünkörper eingebracht werden, dann werden die Hüllen samt Inhalt evakuiert und gasdicht verschlossen. Die Hüllen können jedoch auch auf den desoxidierten Grünkörpern durch direkte Beschichtung erzeugt werden, beispielsweise durch stromlose Abscheidung von Metallen oder durch Aufbringen einer glas-oder keramikartigen Masse, die anschließend im Vakuum unter Bildung der gasdichten Hülle geschmolzen oder gesintert wird. Außerdem ist es vorteilhaft, zwischen der Hülle und dem zu verdichtenden desoxidierten Grünkörper eine Zwischenschicht anzubringen. Hierzu können inerte Pulver, Fasern oder Folien verwendet werden, beispielsweise Graphitfolien und/oder Bornitridpulver. Zusätzlich oder stattdessen können mit einer Hülle aus hochschmelzendem Glas versehene Körper in ein Pulverbett aus rieselfähigem Material eingebettet werden, das zur Versteifung der Glashülle von außen dient. Unter dem Ausdruck "vakuumdicht geschlossene Hülle" ist zu verstehen, daß die Hülle undurchlässig gegenüber dem von außen einwirkenden Druckgas ist und daß innerhalb der Hülle keine eingeschlossenen Restgase vorhanden sind, die den Verdichtungsvorgang stören.

Die mit vakuumdicht geschlossenen Hüllen versehenen desoxidierten Grünkörper werden vorteilhaft in Graphitbehältern untergebracht, dann in den Hochdruckautoklaven eingebracht und auf die erforderliche Verdichtungstemperatur von mindestens 1700°C erhitzt. Hierbei ist es vorteilhaft, Druck und Temperatur getrennt zu regeln, das heißt, den Gasdruck erst dann zu erhöhen, wenn das Hüllmaterial anfängt, sich unter dem Druck plastisch zu verformen. Als inerte Gase für die Druckübertragung werden vorzugsweise Argon oder Stickstoff verwendet. Der angewendete Gasdruck liegt vorzugsweise im Bereich von 150 bis 250 MPa, der unter langsamer Erhöhung bei der angewendeten Endtemperatur erreicht wird, die vorzugsweise im Bereich von 1800° bis 2000°C liegt. Die jeweils optimale Temperatur ist abhängig von der Feinheit und Reinheit des verwendeten Aluminiumnitridausgangspulvers, sowie von der chemischen Zusammensetzung der desoxidierten Grünkörper und sollte nicht überschritten werden, weil sonst Gefahr besteht, daß die gebildeten porenfreien Formkörper eine die Festigkeit mindernde,sogenannte "sekundärrekristallisierte Mikrostruktur" aufweisen, die nicht mehr homogen ist, weil einige Körner stärker als die übrigen gewachsen sind.

Nach Erniedrigung von Druck und Temperatur werden die abgekühlten Körper aus dem Hochdruckautoklaven entnommen und von den Hüllen befreit, beispielsweise durch Abdrehen oder Aufschweißen der Metallhüllen, durch Sandstrahlbehandlung der Glas-oder Keramikhüllen oder durch chemisches Abtragen.

Die so hergestellten Formkörper sind nicht nur praktisch porenfreie mit einer Dichte von mindestens 99,8 % TD, sondern sie sind aufgrund der allseitigen Druckanwendung auch praktisch texturfrei, das heißt, sie haben eine isotrope Mikrostruktur,so daß ihre Eigenschaften nicht mehr richtungsabhängig,sondern in allen Richtungen gleichbleibend sind. Für die zur Charakterisierung der Hochtemperaturfestigkeit herangezogene Biegebruchfestigkeit, die nicht mehr durch Zweitphasen an den Korngrenzen aus Sinterhilfsmittelzusätzen störend beeinflußt wird, werden Werte von > 500 N/mm², vorzugsweise > 600 N/mm² erreicht, die bis zu 1400°C nicht abfallen.

Für die hohen mechanischen Festigkeitseigenschaften sind das Fehlen von Texturen, die äußerst feinkörnige Mikrostruk tur, die praktisch einphasig ist, mit Korngrößen von maximal 5 μm, vorzugsweise < 2 μm, sowie das Auftreten transkristalliner Brüche verantwortlich.

Der Bruchmodus der Formkörper ist bis zu Temperaturen von etwa 1370°C transkristallin. Damit ist sichergestellt, daß die Korngrenzen für das Festigkeitsverhalten keine Schwachstellen darstellen, das heißt unter Belastung bei erhöhter Temperatur werden Korngrenzenleitvorgänge unterdrückt, so daß die Formkörper eine hohe Festigkeit unter Langzeitbedingungen sowie eine hohe Kriechfestigkeit aufweisen. Aufgrund ihrer hohen Reinheit und der praktisch 100 % theoretischen Dichte besitzen die Formkörper ein hervorragendes Isolationsvermögen, entsprechend einem spezifischen elektrischen Widerstand von 10¹⁴ Ohm x cm, zusammen mit einer ausgezeichneten Wärmeleitfähigkeit von mindestens 150 W/mK, vorzugsweise > 200 W/mK.

Die erfindungsgemäßen Formkörper aus polykristallinem AIN haben demnach ein besseres Eigenschaftsspektrum als solche, die nach den vorbekannten Verfahren des Drucklossinterns oder Heißpressens mit oder ohne Zusätze an Sinterhilfsmitteln hergestellt worden sind. Das Verfahren zu ihrer Herstellung durch heißisostatisches Pressen ist in puncto Formgebungsmöglichkeit nicht so eingeschränkt wie beim üblichen Heißpressen. Hochdruckautoklaven können einen großen Ofenraum haben, in dem zahlreiche gehüllte Proben von beliebiger Gestalt gleichzeitig heißisostatisch verdichtet werden können. Aus den heißisostatisch verdichteten AIN-Körpern können dünne Substratplättchen mit üblichen Bearbeitungsmethoden, beispielsweise mit einer Innenlochsäge, kostengünstig hergestellt werden. Insbesondere die Kombination der Eigenschaften: hohe Wärmeleitfähigkeit, hohes elektrisches Isolationsvermögen, niedriger Ausdehnungskoeffizient und hohe Thermoschockbeständigkeit prädestiniert den erfindungsgemäßen Werkstoff aus theoretisch dichtem reinem AIN für Substrat anwendungen in der Hochleistungselektronik, z.B. als Montageplättchen für Halbleiterelemente oder elektronische Schaltungen. Das geringe spezifische Gewicht, die gute Hochtemperaturfestigkeit und Wärmeleitfähigkeit ermöglichen jedoch auch die Anwendung als Strukturwerkstoff im Hochtemperatur-Machinenbau, z.B. im Motorenbau.

Das Verfahren zur Herstellung der erfindungsgemäßen Formkörper wird anhand der folgenden Beispiele näher erläutert. Die in der Beschreibung und in den folgen Beispielen für die Formkörper angegebenen relativen Dichten in % TD sind auf die theoretische Dichte des Aluminiumnitrids von 3,26g/cm³ bezogen.

Beispiel 1

Als Ausgangsmaterial wurde ein technisch reines AIN-Pulver mit einer spezifischen Oberfläche von 8,9 m²/g verwendet. Die chemische Analyse dieses Pulvers, das eine maximale Teilchengröße von 1 µm hatte, ist ion Tabelle 1 zusammengestellt. Als Kohlenstoff enthaltender Zusatz wurde ein handelsübliches,pulverförmiges Phenolformaldehydeharz vom Novolak-Typ (z.B. ALNOVOL® der Fa. Hoechst AG) verwendet. Auf jeweils 100 Gew.-Teile des AIN-Pulvers wurden 1,75 Gewichtsteile Novolak-Pulver in Form einer Lösung in Aceton zugesetzt und der dickflüssige Brei solange an der Luft getrocknet, bis das gesamte Lösungsmittel abgedunstet war. Das nach Beendigung des Knetens erhaltene krümelige Pulver wurde durch Trockenmahlen in einer Strahlmühle entagglomeriert und dann isostatisch unter einem Druck von 100 MPa zu Zylindern 30 ⌀ x 50 mm (30 mm Durchmesser x 50 mm Höhe) verpreßt.
Hierauf wurden die zylindrischen Preßlinge in einem AIN-Tiegel, der in der Heizzone eines Graphitrohrofens vom Tammann-Typ eingesetzt war, bei 1800°C unter strömender Stickstoffatmosphäre unter einem Gasdruck von 0,1 MPa zwei Stunden lang geglüht. Die Glühung erfolgte nach folgendem Temperaturschema

20 -400°C : 60 min
400 -1800°C : 120 min
Halten bei 1800°C : 120 min

Nach Beendigung der Haltezeit wurde der Ofen abgeschaltet und die desoxidierten Grünkörper im Ofen auf Raumtemperatur abgekühlt. Die desoxidierten Grünkörper hatten eine Gründichte von durchschnittlich 66 % TD, einen Restsauerstoffgehalt von 0,29 Gew.-% und einen Restkohlenstoffgehalt von 0,23 Gew.-%. Wie aus der Tabelle 1, in der die Analysen des AIN-Ausgangspulvers und des desoxidierten Grünkörpers gegenübergestellt sind, hervorgeht, tritt in puncto Kohlenstoffgehalt und metallische Verunreinigungen praktisch keine Veränderung auf, während der Sauerstoffgehalt drastisch von 1,80 auf 0,29 Gew.-%, d.h., um knapp über 80 %,bezogen auf den Sauerstoffgehalt des Ausgangspulvers,gesenkt wird.

8

Tabelle 1: Analyse des AlN-Sinterpulvers und des bei 1800°C desoxidierten Grünkörpers

| Elemente | AlN-Sinterpulver (Gew.-%) | desox. Grünkörper (Gew.-%) |
|---|---|---|
| N | 32,9 | 33,8 |
| O | 1,80 | 0,29 |
| C | 0,21 | 0,23 |
| Fe | 0,139 | 0,210 |
| Si | 0,029 | 0,031 |
| Ca | 0,006 | 0,005 |
| Mg | 0,003 | 0,004 |

Die desoxidierten Grünkörper wurden anschließend in vorgefertigte Quarzglashüllen eingebracht und der Raum zwischen der Innenseite der Hülle und dem Grünkörper mit feinteiligem Bornitridpulver ausgefüllt. Dann wurden die Hüllen samt Inhalt evakuiert, im Feinvakuum auf 1000°C aufgeheizt und durch Zuschmelzen im Knallgasbrenner gasdicht verschlossen. Anschliessend wurden die gehüllten Proben im Hochdruckautoklaven unter einem Argongasdruck von 200 MPa bei 1800°C heißisostatisch verdichtet. Das Heißisostatpressen erfolgte nach folgendem Temperatur/Druck-Schema:

20 -800°C / 0,1 MPa : 60 min
800 -1400°C / 0,1 MPa : 60 min
1400 -1600° / 0,1-125 MPa :120 min
1600 -1800°C / 125-200 MPa : 120 min
Halten bei 1800°C / 200 MPa : 60 min
1800 -1350°C / 200 MPa : 60 min
1350 -1250°C / 200 -5 MPa : 30 min

Nach Dekompression und Abkühlen der Formkörper auf Raumtempertur wurden die Proben aus der HiP-Anlage entnommen und die Glashüllen durch Abschlagen und Sandstrahlen entfernt. Die so hergestellten AlN-Formkörper hatten eine Dicht von übereinstimmend 3,26 g/cm³, was 100,0 % der theoretischen Dichte entspricht. Von den Formkörpern wurden nach Durchführung der Auftriebsdichtemessungen, durch Rund-und Planschleifen zylindrische Prüfkörper mit den Abmessungen 20 ⌀ x 28 mm und 20 ⌀ x 1 mm sowie prismatische Prüfstäbchen 2 x 4 x 34 mm für die Bestimmung der Wärmeleitfähigkeit, des spezifischen elektrischen Widerstands sowie der Biegebruchfestigkeit hergestellt. Die Bestimmung der Wärmeleitfähigkeit erfolgte nach der Vergleichstabmethode stationär bis 927°C unter Verwendung von Armco-Eisen als Referenzmaterial. Die Wärmeleitfähigkeit der AlN-Proben in Abhängigkeit von der Prüftemperatur ist in Tabelle 2 angegeben.

## Tabelle 2:

| Prüftemperatur | | Wärmeleitfähigkeit |
| --- | --- | --- |
| (°C) | (K) | (W/mK) |
| 27 | 300 | 161 |
| 177 | 450 | 101 |
| 327 | 600 | 76 |
| 477 | 750 | 61 |
| 627 | 900 | 50 |
| 777 | 1050 | 43 |
| 927 | 1200 | 38 |

Für den spezifischen elektrischen Widerstand, dessen Messung bei Raumtemperatur (25°C) mit Gleichstrom nach der Dreipunkt-Meßmethode erfolgte, wurde ein Wert von $10^{14}$ Ohm x cm erhalten.

Die Biegebruchfestigkeit der Prüfkörper wurde nach der Vierpunkt-Methode bei Auflageabständen von 15 mm (oberer) und 30 mm (unterer) gemessen. Die transkristallin brechenden Prüfstäbchen wiesen bei Raumtemperatur eine mittlere BBF von 621 $N/mm^2$ (Mittelwerte aus 5 Messungen) auf. Für die Hochtemperaturfestigkeit bei 1370°C wurde ein Wert von 635 $N/mm^2$ erhalten. Die Mikrostruktur der Proben war nach Befunden röntgenographischer und keramographischer Analysen einphasig und wies Korngrößen von maximal 2 $\mu$m auf.

### Beispiele 2 und 3 (zum Vergleich)

Beispiel 1 wurde wiederholt mit der Abänderung, daß einmal kein Kohlenstoff-Zusatz (Beispiel 2) und einmal zuviel Kohlenstoff-Zusatz (Beispiel 3) verwendet wurde. Die Grünkörperherstellung im Beispiel 2 erfolgte unter Verwendung von 2 Gew.-% Campher in Form einer acetonischen Lösung als temporäres Bindemittel, das während des Aufheizvorganges bei der Desoxidationsglühung rückstandesfrei entfernt wird. Die Charakterisierung der desoxidierten Grünkörper sowie die Eigenschaftswerte der aus ihnen, analog wie im Beispiel 1 angegeben, durch Heißisostatischpressen in Quarzglashüllen gefertigten AlN-Körper sind in Tabelle 3 zusammengestellt.

Tabelle 3: Untersuchungsergebnisse der desoxidierten Grünkörper und heißisostatisch gepreßten Formkörper

| Beispiel Nr. | desoxidierter Grünkörper | | | heißisostatisch gepreßter Formk. | | | | | |
|---|---|---|---|---|---|---|---|---|---|
| | Dichte (% TD) | Rest-O (Gew%) | Rest-C (Gew%) | Dichte (% TD) | WLF[+] (W/mK) | el. Wid.[+] ($\Omega$cm) | BBF (N/mm$^2$) | | Bruch-modus |
| | | | | | | | 25°C | 1370°C | |
| 2 | 59 | 1,26 | 0,21 | 100 | 98 | $10^{11}$ | 656 | 459 | i |
| 3 | 66 | 0,18 | 0,62 | 100 | 122 | $10^{12}$ | 550 | 581 | t |

[+] ... gemessen bei Raumtemperatur (25°C)

i,t .. interkristallin bzw. transkristallin

Wie aus den Daten von Tabelle 3 ersichtlich,werden durch heißisostatisches Pressen von gehüllten porösen AlN-Grünkörper, die aus dem zusatzfreien AlN-Pulver, d.h., ohne Mitverwendung eines Kohlenstoff-Zusatzes zur Desoxidation der Sauerstoffverunreinigungen, hergestellt worden waren, die erfindungs-gemäßen AlN-Körper nicht erhalten. Die Körper sind zwar auf 100 % der theoretischen Dichte des AlN verdichtet und weisen eine ausgezeichnete Festigkeit bei Raumtemperatur auf, aufgrund ihres hohen Restsauerstoffgehaltes (siehe Tabelle 3, Beispiel 2) sind jedoch die Werte der Wärmeleitfähigkeit, des spezifischen elektrischen Widerstandes und der Hochtemperaturfestigkeit deutlich gegenüber denjenigen von Beispiel 1 verschlechtert. Die Bruchflächen der Proben zeigen sowohl bei Raumtemperatur als auch bei 1370°C einen interkristallinen Bruch, der zusammen mit dem drastischen Abfall der Festigkeit bei 1370°C auf das Vorliegen einer sauerstoffhaltigen Korngrenzenphase zurückgeführt werden kann.

Aus den für Beispiel 3 in Tabelle 3 aufgeführten Ergebnissen geht klar hervor, daß bei Anwendung eines überhöhten C-Zusatzes, der in diesem Falle zu einem Kohlenstoffgehalt von 0,62 Gew.-% C führte, ebenfalls nicht die erfindungsgemäßen AlN-Formkörper erhalten werden. Diese Körper weisen zwar niedrigere Restsauerstoffgehalte und einen transkristallinen Bruchmodus auf, es wird aber bezüglich der Hochtemperatur-und Raumtemperaturfestigkeit, der Wärmeleitfähigkeit und des elektrischen Isoliervermögens nicht mehr das Niveau der erfindungsgemäßen AlN-Körper erreicht.

Beispiele 4 -5

Beispiel 1 wurde wiederholt mit den wesentlichen Abänderungen, daß
1) ein in puncto Reinheit und Teilchengröße anderes AlN-Pulver,
2) der Kohlenstoff-Zusatz in Form von elementarem Kohlenstoff,
3) die desoxidierende Glühung unter einer Stickstoffatmosphäre mit einem Druck von 5000 Pa und einer Endtempera tur von 1400°C (Beispiel 4) und 1700°C (Beispiel 5) durchgeführt wurde,
4) die desoxidierten Grünkörper in vakuumdichte Molybdänkapseln gehüllt waren und schließlich,
5) als Endtemperatur für das Heißisostatpressen 2000°C gewählt wurde.

Die chemische Analyse des AlN-Sinterpulvers, das eine spezifische Oberfläche von 5,6 m²/g und eine maximale Teilchengröße von 3 μm hatte, ist in Tabelle 4 zusammengestellt. Als elementarer Kohlenstoff wurde Ruß mit einer spezifischen Oberfläche von 150 m²/g in einer Menge entsprechend 0,63 g, bezogen auf 100 g AlN-Pulver, eingesetzt. Zur Verbesserung der Preßbarkeit wurde analog wie in Beispiel 2 angegeben, die AlN-C-Mischung mit einer Campherlösung zu einem preßfertigen Pulver weiterverarbeitet. Wie aus Tabelle 4, in der die Analysen des AlN-Sinterpulvers und der bei 1400°C und 1700°C geglühten desoxidierten Grünkörper gegenübergestellt sind, hervorgeht, war bei der 1400°C-Desoxidationsglühung - (Beispiel 4) im Gegensatz zu Beispiel 5 keine ausreichende Desoxidation erfolgt, d.h., die Reaktion blieb unter den gewählten Bedingungen bei Restsauerstoff-sowie Restkohlenstoffgehalten von jeweils knapp oberhalb der definitionsgemäßen Grenze von 0,35 Gew.-% stehen.

Tabelle 4: Analyse des AlN-Sinterpulvers und der bei 1400°
sowie 1700°C desoxidierten Grünkörper
* n.b. = nicht bestimmt

| Elemente | AlN-Sinterpulver (Gew.-%) | Grünkörper desox. bei 1400°C | 1700°C (Gew.-%) |
|---|---|---|---|
| N | 33,1 | n.b. * | 34,0 |
| O | 1,67 | 0,41 | 0,15 |
| C | 0,11 | 0,39 | 0,12 |
| Fe | 0,002 | n.b. | 0,075 |
| Si | 0,010 | n.b. | 0,020 |
| Ca | 0,002 | n.b. | 0,003 |
| Mg | 0,001 | n.b. | 0,002 |

Die bei 1400°C und 1700°C geglühten Grünkörper wurden in vakuumdichte Molybdänkapseln eingeschweißt und nach dem HiP-zyklus, der analog wie in Beispiel 1 angegeben, jedoch bei einer Endtemperatur von 2000°C durchgeführt wurde, durch Aufschweißen in einer Elektronenstrahl-Schweißanlage geöffnet.

Die heißisostatisch gepreßten AlN-Körper wurden nach Druchführung von Auftriebsdichtemessungen hinsichtlich ihrer Mikrostruktur sowie ihrer Werte für die Wärmeleitfähigkeit und des spezifischen elektrischen Widerstandes, analog wie in Beispiel 1 angegeben, untersucht. Die Ergebnisse dieser Untersuchungen sind in Tabelle 5 zusammengestellt.

Tabelle 5:

| Beispiel Nr. | Dichte (% TD) | Wärmeleit-fähigkeit bei 25°C (W/mK) | spez. elektr. Widerstand bei 25°C (Ohm . cm) | Mikrostruktur-korngröße μm |
|---|---|---|---|---|
| 4 | 100 | 90 | $10^{13}$ | < 3 |
| 5 | 100 | 206 | $10^{14}$ | < 4 |

Demnach kann gemäß Beispiel 5 nach praktisch vollständiger Desoxidation, d.h., durch Heißisostatischpressen von bis auf Restsauerstoff-und Restkohlenstoffgehalten von ≤ 0,15 Gew.-% desoxidierten Grünkörpern die Wärmeleitfähigkeit von porenfreiem polykristallinem AlN bis auf oberhalb 200 W/mK gesteigert werden. Die beim Vergleich von Beispiel 5 mit Beispiel 1 erzielte höhere Wärmeleitfähigkeit kann nicht nur auf die extrem niedrigen Gehalte an nichtmetallischen Verunreinigungen (O und C), sondern auch auf den Reinheitsgrad der desoxidierten Grünkörper von rund 99,9 %, bezogen auf die metallischen Verunreinigungen, zurückgeführt werden.

Der gravierende Einfluß von Restsauerstoff-und Restkohlenstoffgehalten von > 0,35 % auf die Wärmeleitfähigkeit und den elektrischen Widerstand geht deutlich beim Vergleich der Beispiele 4 und 5 hervor. Trotz Verwendung eines sehr reinen AlN-Sinterpulvers mit einer Reinheit von > 99,9 %, bezogen auf die Metallverunreinigungen, werden gemäß Beispiel 4 nicht mehr die erfindungsgemäßen AlN-Körper erhalten.

Es sei hier angemerkt, daß sich dieses reine AlN-Sinterpulver auch ohne Verwendung der HiP-Technik und ohne weitere sinterfördernde Zusätze nach dem konventionellen (axialen) Heißpreßverfahren mit Graphitstempeln unter Bildung porenfreier AlN-Formkörper mit einer Dichte von 3,26 g/cm³ verdichten ließ, die jedoch nur Wärmeleitfähigkeiten unterhalb 100 W/mK aufwiesen.

## Ansprüche

1. Praktisch porenfreie Formkörper aus polykristallinem Aluminiumnitrid mit einer Dichte von mindestens 99,8 % TD, bezogen auf die theoretisch mögliche Dichte von reinem Aluminiumnitrid, bestehend aus mindestens 99 Gew.-% Aluminiumnitrid,
bis zu 0.35 Gew.-% Restsauerstoff,
bis zu 0.35 Gew.-% Restkohlenstoff und
bis zu 0.30 Gew.-% metallischen Verunreinigungen (Fe,Si,Ca,Mg) insgesamt,
wobei das Aluminiumnitrid in Form einer im wesentlichen einphasigen, homogenen, isotropen Mikrostruktur mit Korngrößen von maximal 5 μm vorliegt, der Restsauerstoff und der Restkohlenstoff in Form einer festen Lösung im AlN-Gitter vorhanden und bis zu 2400-facher Vergrößerung nicht als getrennte Phase(n) nachweisbar sind mit den Eigenschaften:
Biegebruchfestigkeit (gemessen nach der 4-Punkt-Methode) bei Raumtemperatur und biz zu 1400°C von mindestens 500 N/mm², überwiegend transkristallinem Bruchmodus und Wärmeleitfähigkeit bei 300 K von mindestens 150 W/mK.

2. Praktisch porenfreie Formkörper gemäß Anspruch 1, die aus porösen, desoxidierten Grünkörpern mit einer Dichte von maximal 70 % TD, bestehend aus
mindestens 99 Gew.-% Aluminiumnitrid,
bis zu 0.35 Gew.-% Restsauerstoff,
bis zu 0.35 Gew.-% Restkohlenstoff und
bis zu 0.30 Gew.-% metallischen Verunreinigungen (Fe,Si,Ca,Mg) insgesamt,
durch isostatische Heißpressen in einer vakuumdicht geschlossenen Hülle bei einer Temperatur von 1700° bis 2100°C und einem Druck von 100 bis 400 MPa im Hochdruckautoklaven unter Verwendung eines inerten Gases als Druckübertragungsmedium hergestellt worden sind.

3. Verfahren zur Herstellung der praktisch porenfreien Formkörper gemäß Anspruch 1 und 2 aus Pulvergemischen bestehend aus Aluminiumnitrid mit geringem Gehalt an metallischen Verunreinigungen und einem Kohlenstoff enthaltenden Zusatz in Form von feinteiligem Kohlenstoff per se oder einem bei Temperaturen bis zu 1000°C unter Bildung von freiem Kohlenstoff verkokbaren organischen Material,ohne Mitverwendung von Sinterhilfsmitteln, durch Hitzebehandlung in nicht-oxidierender Atmosphäre zur Erniedrigung des Sauerstoffgehaltes im Aluminiumnitrid und anschließendes Verdichten, **dadurch gekennzeichnet**, daß die Pulvergemische aus Aluminiumnitrid und dem Kohlenstoff enthaltenden Zusatz unter Bildung von vorgeformten Grünkörpern kompaktiert, diese vorgeformten Grünkörper einer Hitzebehandlung bei 1660° bis 1800°C in Stickstoffatmosphäre unterzogen bis zur Bildung von porösen, desoxidierten Grünkörpern mit einer Dichte von maximal 70 % TD und mit einer chemischen Zusammensetzung aus
mindestens 99 Gew.-% Aluminiumnitrid,
bis zu 0.35 Gew.-% Restsauerstoff,
bis zu 0.35 Gew.-% Restkohlenstoff und
bis zu 0.30 Gew.-% metallische Verunreinigungen (Fe,Si,Ca,Mg) insgesamt,
diese porösen, desoxidierten Grünkörper in vorgefertigte Hüllen aus hochschmelzendem Glas, Keramik oder Metall eingesetzt oder mit einem eine vakuumdichte Hülle bildenden Material aus hochschmelzenden Glas, Keramik oder Metall beschichtet, die Hüllen vakuumdicht geschlossen, dann die mit den Hüllen versehenen desoxidierten Grünkörper in den Hochdruckautoklaven eingebracht und auf 1700° bis 2100°C erhitzt unter langsamer Erhöhung des Gasdruckes auf 100 bis 400 MPa durch das als Druckübertragungsmedium verwendete inerte Gas, bis zur Bildung der praktisch porenfreien Formkörper mit einer Dichte von mindestens 98,8 % TD und mit gleicher chemischer Zusammensetzung wie die desoxidierten Grünkörper, diese Formkörper nach dem Abkühlen ausdem Hochdruckautoklaven entnommen und von den Hüllen befreit werden.